Europäisches Patentamt

European Patent Office

Office européen des brevets

(11) Publication number: **0 193 609**
**A1**

## (12) EUROPEAN PATENT APPLICATION

published in accordance with Art. 158(3) EPC

(21) Application number: **85901587.7**

(22) Date of filing: **02.04.85**

Data of the international appli-
cation taken as a basis:

(86) International application number:
**PCT/JP 85/00159**

(87) International publication number:
**WO 86/01862 (27.03.86 86/7)**

(51) Int. Cl.⁴: **F 16 C 32/04,** B 23 B 19/02

(30) Priority: **08.09.84 JP 188745/84**

(43) Date of publication of application: **10.09.86**
**Bulletin 86/37**

(84) Designated Contracting States: **FR**

(71) Applicant: **NTN TOYO BEARING COMPANY, LIMITED,**
**3-17, Kyomachibori 1-chome Nishi-ku, Osaka-shi**
**Osaka 550 (JP)**

(72) Inventor: **NAKAZEKI, Tsugito, 1368 D-15, Higashi**
**Kaizuka, Iwata-shi Shizuoka 438 (JP)**
Inventor: **FURAHASHI, Shoji, 649, Kobitomi-cho,**
**Hamamatsu-shi Shizuoka 431-11 (JP)**

(74) Representative: **Loriot, Jacques et al, c/o SA.**
**FEDIT-LORIOT 38, avenue Hoche, F-75008 Paris (FR)**

(54) **CONTROLLED RADIAL MAGNETIC BEARING DEVICE.**

㊼ A controlled radial magnetic bearing device has control
circuits (7X, 7Y) which control the magnetic force of electro-
magnets (2) that magnetically support a rotary shaft (1),
responsive to outputs of position sensors (5X, 5Y) that detect
the position of the rotary shaft (1) in a radial direction. Into
the control circuits (7X, 7Y) is inserted a band elimination
filter (10) of which the central frequency is twice, or two and
four times as much as the number of revolutions detected
by a revolving speed detector (12). The filter (10) removes
frequency components that stem from vibration, and
prevents the voltage applied by a control power output unit
to the electromagnets (2) from saturating.

SPECIFICATION

Controlled Radial Magnetic Bearing Device

Technical Field

The present invention relates to a magnetic bearing device, and particularly to a controlled radial magnetic bearing device.

Background of Technology

Controlled radial magnetic bearing devices are known. Such magnetic bearing devices are widely used as bearings for light-load, high-speed machine tools such as a milling spindle in view of advantages that there is no mechanical contact and friction. It can keep a rotary shaft at a predetermined radial position by its controlled magnetic force.

A magnetic bearing device of this type includes electromagnets arranged at a suitable distance therebetween around the rotary shaft to bear the rotary shaft in a radial direction by magnetic force, position sensors for detecting the radial position of the rotary shaft, and control circuits for controlling the electromagnets to maintain the rotary shaft at a predetermined radial position according to the output of the position sensor.

The electromagnet includes a bias coil for generating the main magnetic flux for the magnetic bearing by supplying a predetermined current, and a control coil. Between the position sensor and the control coil, a servo circuit is provided. When the position sensor detects any displacement of the rotary shaft from the predetermined position, the servo circuit supplies to the control coil such a deviation signal as to bring the rotary shaft back to its predetermined position, thereby maintaining the rotary shaft at its predetermined radial position.

One problem is that if such a radial magnetic bearing is used as the bearing for the spindle of a machine tool, disturbance produced by the cutter during cutting causes the spindle to vibrate at a frequency (number of revolutions per second) near its natural frequency, thus making it impossible to obtain a sufficient cutting force. In order to solve this problem, Japanese patent application 58-122753 proposed to give a gain increase and phase advance to the control circuit in a frequency band corresponding to the natural frequency of the spindle, thereby damping the undue effect of disturbance in the frequency band. This solution achieved a drastic increase in the cutting capacity over the conventional machine.

However, with such a controlled radial magnetic bearing, disturbance in rotation at a frequency band corresponding to the natural frequency of the rotary shaft can be effectively damped, but, in cutting under heavy load with a large cutting depth, the spindle vibrates at frequencies equal to integral numbers of times the number of revolutions of the spindle. If such a disturbance is suppressed by magnetic force, voltage saturation will occur at the control power output section, thus disabling control.

An object of the present invention is to provide a controlled radial magnetic bearing device which has a stable control characteristics, not forcibly controlling the vibration of the spindle under heavy load.

Another object of the present invention is to provide a controlled radial magnetic bearing device which removes the control outputs of the frequency components which are double and quadruple the number of revolutions at heavy load, providing only the rigidity obtained by inertia force acting on the shaft to such frequencies, thereby avoiding voltage saturation of the control system by such frequencies and retaining the control function mainly to other lower frequencies.

Disclosure of the Invention

In accordance with the present invention, there is provided a controlled radial magnetic bearing device having electromagnets arranged around a rotary shaft at a suitable distance therebetween for bearing a rotary shaft in a radial direction by magnetic force, position sensors for detecting the radial position of the rotary shaft, and control circuits for controlling the electromagnets in response to the output of the position sensors to keep the rotary shaft at a predetermined radial position, characterised in that a band-rejection filter is provided in each of the control circuits, the center frequency of the band-rejection filter being a frequency equal to the double, or the double and quadruple of the number of revolutions of the rotary shaft.

With the magnetic bearing device according to the present invention, if the rotary shaft used as the spindle of a machine tool vibrates at heavy load at frequencies double and quadruple the number of revolutions of the rotary shaft and the vibration is detected by the position sensors, the band-rejection filter in the control circuit removes the frequency components of the control output resulting from the vibration, thereby preventing the voltage saturation at the section which outputs a control power to the electromagnets.

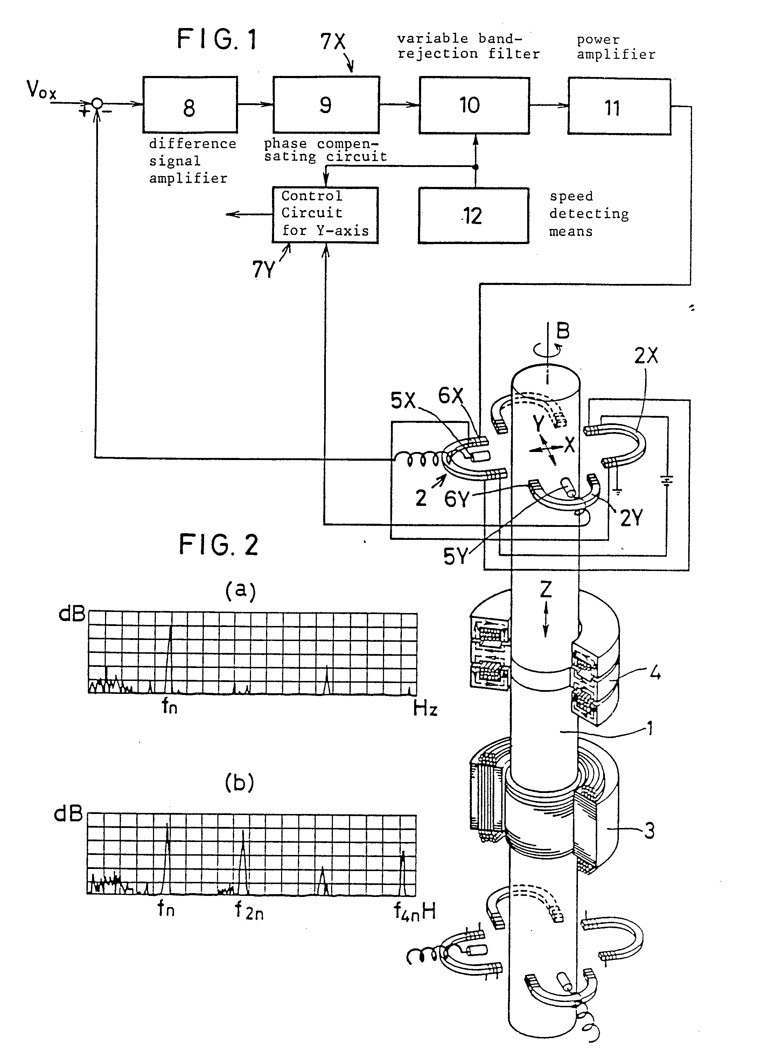

The spindle of a machine tool using a conventional magnetic bearing device controlled by control circuits not having such a band-rejection filter, vibrates at a frequency $f_n$ equal to the number of revolutions as shown in Fig. 2a when turning under no load, and shows vibrations including vibration components at frequency $f_{2n}$ equal to the double of the number of revolutions and at frequency $f_{4n}$ equal to the quadruple of the number of revolutions, as shown in Fig. 2b, when turning for cutting under heavy load. This is known by performing the frequency analysis of the outputs of the position sensors. In such a case, voltage saturation sometimes occurs at these particular frequencies at the output section of the control system.

With the present invention, because the control circuits are provided with a band-rejection filter, the center frequency of which is the frequency $f_{2n}$ or, $f_{2n}$ and $f_{4n}$, such a voltage saturation at the control power output section is prevented. In this case, although the frequency component at frequency $f_n$ is naturally present, voltage saturation is not caused by the frequency component because the variation in the peak value is small in comparison with the vibrations at other frequencies and the gain of voltage at the control power output section in the control circuit is low.

Other features, objects and advantages of the present

0193609

invention will become apparent from the following description about the embodiment taken with reference to the
accompanying drawings.

Simplified Explanation of the Drawings

Fig. 1 is a block diagram of an embodiment of controlled radial magnetic bearing device according to the
present invention;

Figs. 2a and 2b are waveforms showing the results of
frequency analysis of periodical radial displacement of a
conventional magnetic bearing.

Best Form for Embodying Invention

Referring to Fig. 1, a rotary shaft 1 used e.g. as the
spindle of a machine tool is rotated by a motor 3 in the
direction of arrow B, magnetically supported in a radial
direction by a radial magnetic bearing 2 having electromagnets 2X for X-axis and electromagnets 2Y for Y-axis
disposed on an X-axis and a Y-axis, respectively, perpendicular to each other in a plane at right angles to the axis
of the rotary shaft 1. Numeral 4 designates a thrust
magnetic bearing for suppressing any displacement of the
rotary shaft 1 in an axial direction Z. Two or more radial magnetic bearings 2 are usually provided at suitable axial positions e.g. near the ends of the rotary shaft.

On the X-axis and Y-axis, a position sensor 5X for X-axis and a position sensor 5Y for Y-axis are arranged, respectively. They detect any displacement of the rotary shaft with respect to its reference position in the X-axis and Y-axis directions, respectively, and generate outputs proportional to the amounts of displacement. The electro magnets 2X and 2Y have control windings 6X, 6Y, respectively, for adjusting their magnetic forces. The exciting currents for these control windings are controlled by a control circuit 7X for X-axis and a control circuit 7Y for Y-axis, respectively, which will be described later. Similarly, the radial magnetic bearing provided at the bottom of the rotary shaft 1 is provided with a control circuit 7X for X-axis and a control circuit 7Y for Y-axis.

The control circuit 7X for X-axis comprises a difference signal amplifier 8 for amplifying any difference signal $\Delta V$ between a reference voltage Vox indicative of a reference position of the rotary shaft in the X-axis direction and the output of the position sensor 5X for X-axis, a phase compensating circuit 9 for receiving the output of the difference signal amplifier 8 and compensating the lead or delay in phase of the control system, a variable band-rejection filter 10 for removing the frequency components double and quadruple the number of revolutions from the output of the phase compensating circuit 9 according to the output of a speed detecting means 12 which will be described later, and a power amplifier 11 for amplifying the output of the filter 10. The abovesaid frequency components are eliminated by the filter 10, so that the power amplifier 11 will be prevented from voltage saturation.

The speed detecting means 12 generates an output proportional to the number of revolutions of the rotary shaft 1. According to its output, the band-rejection filter 10 removes the particular frequency components. The filter 10 should be so set as to start operation from a speed $n_0$ (in revolutions per second) which is about 0.7 time the maximum speed of the rotary shaft 1 for a specified load, with the central frequency fixed at $2n_0$ for any speed below the speed $n_0$. This is because if the filter 10 are operated at speed below $n_0$, the effect of damping any natural vibration component will be decreased.

## Industrial Availability

With the controlled radial magnetic bearing device according to the present invention, voltage saturation at the control power output section will not occur even when the spindle of a machine tool is rotating under high load.

A stable control characteristic can be obtained with a relatively low line voltage.  Therefore, the controlled radial magnetic bearing device can be widely used with the spindle of various industrial machines.

## Claim

1.      A controlled radial magnetic bearing device having electromagnets arranged around a rotary shaft at a suitable distance therebetween for bearing the rotary shaft in a radial direction by magnetic force, position sensors for detecting the radial position of the rotary shaft, and control circuits for controlling said electromagnets in response to the output of said position sensors to keep the rotary shaft at a predetermined radial position, characterised in that said control curcuits include a speed detecting means for detecting the number of revolutions of the rotary shaft and a. band-rejection filter, the center frequency of which is a frequency equal to the double of the number of revolutions of rotary shaft or frequencies equal to the double and quadruple of the number of revolutions of the rotary shaft detected by said speed detecting means.

2.      The magnetic bearing device as claimed in claim 1, wherein said control circuits comprise a difference signal amplifier for amplifying the difference signal $\Delta V$ indicative of the difference between a reference voltage $V_{ox}$ indicative of the reference position of the rotary shaft in the X-axis direction and the output of the position sensor for X-axis, a phase compensating circuit for receiving the output of said difference signal amplifier and compensating the lead or delay in phase of the control system, a band-rejection filter having a center frequency which is a frequency equal to the double, or the double and quadruple of the number of revolutions of .the rotary shaft detected by said speed detecting means, and a power amplifier for amplifying the output of said band-rejection filter.

3.      The magnetic bearing device as claimed in claim 1 or 2, wherein said band-rejection filter is a variable band-rejection filter which has a center frequency varying in response to the output of said speed detecting means.

4.      The magnetic bearing device as claimed in any of claims 1 - 3, wherein said band-rejection filter starts to operate from the rotating speed $n_0$ (in revolutions per second) which is about 0.7 time the maximum speed of the rotary shaft for a predetermined load, the center frequency of said band-rejection filter being fixed to $2n_0$ at any lower rotating speed.

FIG. 1

$V_{ox}$

8 — difference signal amplifier

7X

9 — phase compensating circuit

variable band-rejection filter — 10

power amplifier — 11

Control Circuit for Y-axis

7Y

12 — speed detecting means

FIG. 2

(a)

dB

$f_n$  Hz

(b)

dB

$f_n$  $f_{2n}$  $f_{4n}$ H

0193609

# INTERNATIONAL SEARCH REPORT

International Application No. PCT/JP85/00159

| I. CLASSIFICATION OF SUBJECT MATTER (if several classification symbols apply, indicate all) 3 |
|---|
| According to International Patent Classification (IPC) or to both National Classification and IPC |
| Int. Cl$^4$ F16C32/04, B23B19/02 |

## II. FIELDS SEARCHED

| Minimum Documentation Searched 4 | |
|---|---|
| Classification System | Classification Symbols |
| IPC | F16C32/04, B23B19/02 |

| Documentation Searched other than Minimum Documentation to the Extent that such Documents are Included in the Fields Searched 5 | |
|---|---|
| Jitsuyo Shinan Koho | 1926 – 1985 |
| Kokai Jitsuyo Shinan Koho | 1971 – 1985 |

## III. DOCUMENTS CONSIDERED TO BE RELEVANT 14

| Category* | Citation of Document, 16 with indication, where appropriate, of the relevant passages 17 | Relevant to Claim No. 18 |
|---|---|---|
| A | JP, A, 52-93853 (Société Anonyme Dite Société Europeenne de Propulsion) 6 August 1977 (06. 08. 77) Page 2, upper left column, line 16 to upper right column, line 11 & US, A, 4128795 & FR, B, 2336603 & GB, A, 1567785 | 1 – 4 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| June 19, 1985 (19. 06. 85) | July 1, 1985 (01. 07. 85) |
| International Searching Authority 1 | Signature of Authorized Officer 20 |
| Japanese Patent Office | |

Form PCT/ISA/210 (second sheet) (October 1981)